(19) Europäisches Patentamt
European Patent Office
Office européen des brevets

(11) **EP 2 421 133 A1**

(12) **EUROPEAN PATENT APPLICATION**

(43) Date of publication:
**22.02.2012 Bulletin 2012/08**

(51) Int Cl.:
***H02M 3/155*** *(2006.01)*

(21) Application number: **10173165.1**

(22) Date of filing: **18.08.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **ABB Oy
00380 Helsinki (FI)**

(72) Inventor: **Suntio, Teuvo
37120 Nokia (FI)**

(74) Representative: **Valkeiskangas, Tapio Lassi Paavali
Kolster Oy Ab
Iso Roobertinkatu 23
P.O. Box 148
00121 Helsinki (FI)**

(54) **Switching converter**

(57) The present invention provides a current-fed quadratic boost converter topology. A current-fed converter can, in principle, operate within a full range from short-circuit conditions to open-circuit conditions. Its input voltage can also be controlled. The quadratic behaviour allows conversion ratios which are larger than those with a conventional converter.

Harmful converter internal resonances typical of current-fed converters can be reduced by using a control method according to the present invention.

Figure 1

**Description**

FIELD OF THE INVENTION

The present invention relates to switching converters, and particularly to converters interfacing solar generators.

BACKGROUND OF THE INVENTION

The new forms of power generation and storage have also introduced a need for ways to interface with them. Power may have to be converted into a more usable form. Solar power generation is an example of this.

A solar panel is typically an array of series/parallel-connected solar cells. The voltage produced by it is typically too low to be used directly in an application for supplying electricity to the grid. On the other hand, the voltage may be too high to be fed directly to a battery or array of batteries. In addition to his, the power output of a solar panel depends greatly on the lighting conditions. Therefore, the output power of a solar panel may rapidly fluctuate considerably.

A conventional way to interface with solar panels is to use a voltage-fed switching converter. The converter converts the voltage produced by the solar panels into another voltage which is more suitable for the application.

A disadvantage associated with the above arrangement is that it has a limited operational range. The application may have to operate under conditions where a greater operational range is required.

BRIEF DESCRIPTION OF THE INVENTION

An object of the present invention is to provide a method and an apparatus for implementing the method so as to overcome the above problem. The object of the invention is achieved by a method and an apparatus which are characterized by what is stated in the independent claims. Preferred embodiments of the invention are disclosed in the dependent claims.

The invention is based on the idea of using a current-fed quadratic boost converter topology. A current-fed converter can, in principle, operate within the whole range of an UI curve from short-circuit to open-circuit condition, and its input voltage can be readily controlled. The quadratic behaviour between input and output in regard of a duty cycle allows a conversion ratio which is larger than that with a conventional converter.

Harmful converter internal resonances typical of current-fed converters can be reduced by using the control method according to the present invention.

BRIEF DESCRIPTION OF THE DRAWINGS

In the following the invention will be described in greater detail by means of preferred embodiments with reference to the accompanying drawings, in which

Figure 1 illustrates a switching converter according to the present invention;
Figure 2 illustrates polarities of relevant currents and voltages;
Figure 3 illustrates an on-time state equivalent circuit structure of a converter according to the present invention;
Figure 4 illustrates an off-time state equivalent circuit structure of a converter according to the present invention;
Figure 5 illustrates approximate waveforms of capacitor voltages and inductor currents;
Figure 6 illustrates an embodiment of the present invention, and
Figure 7 illustrates a pulse width generation procedure.

DETAILED DESCRIPTION OF THE INVENTION

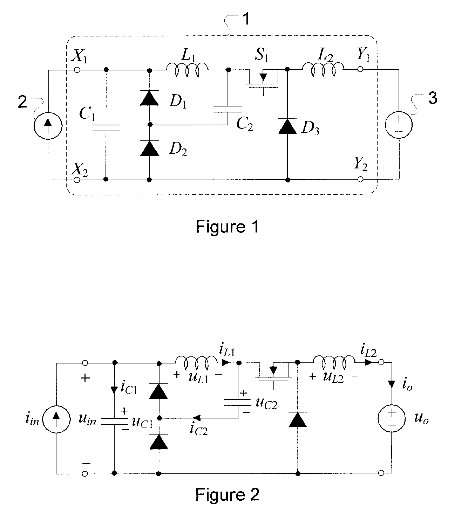

Figure 1 illustrates a switching converter 1 according to the present invention. The switching converter 1 is current-fed and comprises a first input terminal $X_1$ and a second input terminal $X_2$, which both are adapted to be connected to a current source 2.

The switching converter 1 also comprises a first output terminal $Y_1$ and a second output terminal $Y_2$, which are adapted to be connected to a load 3. The second output terminal $Y_2$ is connected to the second input terminal $X_2$.

A first inductor $L_1$ with two terminals is connected from its first terminal to the first input terminal $X_1$, and a second inductor $L_2$ with two terminals is connected from its second terminal to the first output terminal $Y_1$. A switching device $S_1$ is connected between the first inductor $L_1$ second terminal and the second inductor $L_2$ first terminal, and is adapted to be able to set the connection between the first inductor $L_1$ and the second inductor $L_2$ to a conducting and a non-conducting state.

A first capacitor $C_1$ is connected between the input terminals $X_1$ and $X_2$. A first rectifier device $D_1$ and a second

rectifier device $D_2$ are also connected in series between the input terminals $X_1$ and $X_2$, thus allowing a flow of current from the second input terminal $X_2$ to the first input terminal $X_1$.

A second capacitor $C_2$ is connected between the second terminal of the first inductor $L_1$ and a connection point between the first rectifier device $D_1$ and the second rectifier device $D_2$.

A third rectifier device $D_3$ is connected between the second output terminal $Y_2$ and the first terminal of the second inductor $L_2$, thus allowing a flow of current from the second output terminal $Y_2$ to the first terminal of the second inductor $L_2$.

The switching converter 1 also comprises means for controlling a voltage between the input terminals on the basis of a control signal.

The converter has such a steady-state conversion ratio $M(D)$ that a steady-state input current $I_{in}$ is reflected to a steady-state output current $I_o$, divided by the square of a complement $D'$ of a duty ratio $D$ (i.e., $M(D) = 1/D'^2$), and a steady state output voltage $U_o$ to a steady state input voltage $U_{in}$ with the same conversion ratio. This quadratic behaviour between input and output allows conversion ratios which are larger than those when using conventional converters.

Figure 2 illustrates polarities of relevant currents and voltages. The instantaneous voltage over the source 2 and the instantaneous current through the source 2 are denoted by $u_{in}$ and $i_{in}$, respectively. Similarly, the instantaneous voltage over the load 3 and the instantaneous current through the load 3 are denoted by $u_o$ and $i_o$, respectively. The instantaneous voltages over capacitors and inductors and the instantaneous currents through capacitors and inductors are denoted in similar manner, as shown in Figure 2.

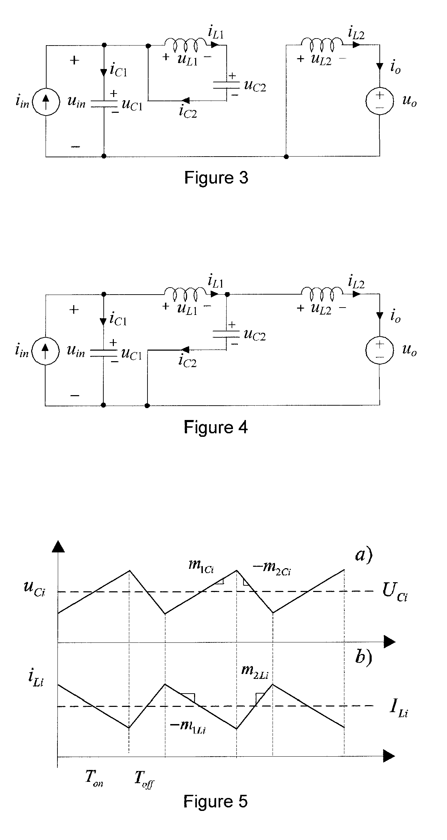

The converter has two switching states: an on-time state and an off-time state. During the on-time state, the switching device $S_1$ and the diode $D_2$ are non-conducting and the diodes $D_1$ and $D_3$ are conducting. During the off-time state, the switching device $S_1$ and the diode $D_2$ are conducting and the diodes $D_1$ and $D_3$ are non-conducting. The on-time state yields an on-time equivalent circuit structure given in Figure 3. The off-time state, in turn, yields an off-time equivalent circuit structure given in Figure 4.

By applying Kirchhoff's laws to the on-time state equivalent circuit in Figure 3, the following set of equations can be formed:

$$
\begin{aligned}
u_{L1} &= -u_{C2} \\
u_{L2} &= -u_o \\
i_{C1} &= i_{in} \\
i_{C2} &= i_{L1} \\
u_{in} &= u_{C1} \\
i_o &= i_{L2}.
\end{aligned}
\qquad (1)
$$

In a similar manner, a set of equations can be formed using the off-time state equivalent circuit in Figure 4:

$$
\begin{aligned}
u_{L1} &= u_{C1} - u_{C2} \\
u_{L2} &= u_{C2} - u_o \\
i_{C1} &= i_{in} - i_{L1} \\
i_{C2} &= i_{L1} - i_{L2} \\
u_{in} &= u_{C1} \\
i_o &= i_{L2}.
\end{aligned}
\qquad (2)
$$

According to (1) and (2), average voltages across the inductors, average currents through the capacitors as well as an average output current and input voltage are given as

$$\langle u_{L1} \rangle = (1-d)\langle u_{C1} \rangle - \langle u_{C2} \rangle$$
$$\langle u_{L2} \rangle = (1-d)\langle u_{C2} \rangle - \langle u_o \rangle$$
$$\langle i_{C1} \rangle = \langle i_{in} \rangle - (1-d)\langle i_{L1} \rangle$$
$$\langle i_{C2} \rangle = \langle i_{L1} \rangle - (1-d)\langle i_{L2} \rangle \qquad\qquad (3)$$
$$\langle u_{in} \rangle = \langle u_{C1} \rangle$$
$$\langle i_o \rangle = \langle i_{L2} \rangle,$$

where angle brackets $\langle \ \rangle$ denote anaverage over time and d denotes a duty ratio.

In order to maintain flux linkage and charge balances, the average voltages across the inductors and average currents through the capacitors have to be zero. According to these principles, by denoting $D' = 1-D,$ operating-point-related steady-state variables are given as

$$U_{C1} = \frac{U_o}{D'^2} \quad U_{C2} = \frac{U_o}{D'}$$

$$I_{L1} = \frac{I_{in}}{D'} \quad I_{L2} = \frac{I_{in}}{D'^2}$$

$$I_o = \frac{I_{in}}{D'^2} \qquad\qquad (4)$$

$$U_{in} = \frac{U_o}{D'^2},$$

which indicate that the input-to-output and output-to-input relations are quadratic functions of the complement D' of the duty ratio D. The switching frequency of the converter is assumed to be $F_s$ and, consequently, the cycle time $T_S = 1/Fs$. The duty ratio $D = T_{on} / T_s$ and, therefore, the length of on-time $T_{on} = DT_s$ and the length of off-time $T_{off} = D'T_s$ because $T_s = T_{on} + T_{off}$.

The approximate waveforms of the capacitor voltages are shown in Figure 5 as a curve a exhibiting triangle shapes. The average voltages $U_{ci}$ are represented by dashed lines and the instantaneous voltages $u_{ci}$ are represented by solid lines. The on-time and off-time slopes of the waveform are denoted by $m_1c_i$ and $-m_{2Ci}$ respectively. They can be given for the capacitor $C_1$ by

$$m_{1C1} = I_{in} / C_1$$
$$m_{2C1} = DI_{in} / (D'C_1) \qquad\qquad (5)$$

as well as for the capacitor $C_2$ by

$$m_{1C2} = I_{in} / (D'C_2)$$
$$m_{2C2} = DI_{in} / (D'^2 C_2). \qquad\qquad (6)$$

According to the defined slopes, peak-to-peak ripples associated with the capacitors can be determined by

4

$$\Delta U_{Ci-pp} = m_{1Ci}DT_s \,. \tag{7}$$

The average voltages $U_{ci}$ are defined in (4). The selection of the capacitors can be based on the determined peak-to-peak ripple and average voltages.

The approximate waveform of the inductor currents are shown in Figure 5 as a curve b also exhibiting triangle shapes. The average currents $I_{Li}$ are represented by dashed lines and the instantaneous voltages $i_{Li}$ are represented by solid lines. The on-time and off-time slopes of the waveform are denoted by $-m_{ILi}$ and $m_{2wLi}$. They can be given for the inductor $L_1$ by

$$m_{1L1} = U_o \,/(D'L_1) \tag{8}$$
$$m_{2L1} = DU_o \,/(D'^2 L_1)$$

as well as for the inductor $L_2$ by

$$m_{1L2} = U_o \,/\, L_2 \tag{9}$$
$$m_{2L2} = DU_o \,/(D'L_2) \,.$$

The corresponding peak-to-peak ripple currents for the inductors can be given by

$$\Delta i_{Li-pp} = m_{1Li}DT_s \tag{10}$$

and the corresponding average currents $I_{Li}$ are defined in (4). The selection of the inductors $L_i$ can be carried out based on the determined ripple and average currents.

In current-fed converters, the input voltage can be controlled. Usually, converter internal resonances tend to reduce the achievable control bandwidth of the input-voltage feedback loop and, as a consequence, the transient response can be unacceptably slow.

The resonances can be reduced by applying a control method according to the present invention. An internal feedback loop from a capacitor voltage or a sum of capacitor voltages of a converter according to the present invention, provided with an averaging controller (typically a proportional-integral controller), is added to a control signal of pulse width modulation generation. In other words, the control signal and a feedback signal from a voltage over a capacitor of the switching converter are used for determining an average term. The average term is then added to the control signal and the resulting signal is used for controlling the switching devices. This control method will is in this document called Average-Voltage-Mode Control (AVMC).

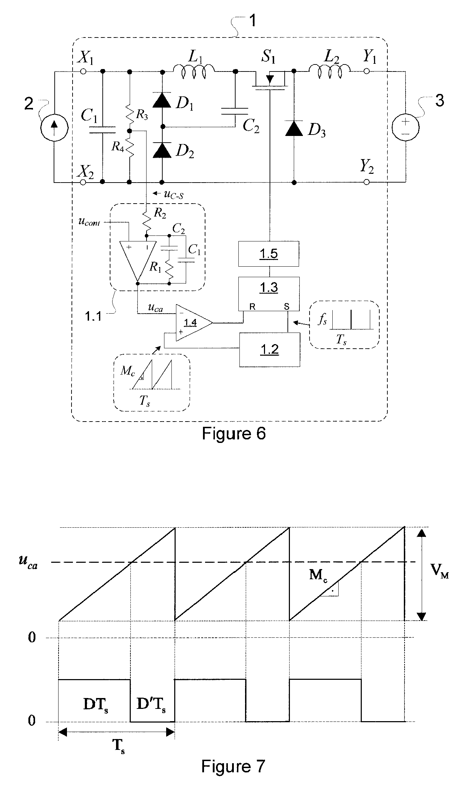

Figure 6 illustrates an embodiment of the present invention in association with a solar generator. The converter 1 is connected to the solar generator 2 and a DC load 3. The solar-generator 2 voltage can be controlled, for instance for locating the operation point of the solar generator at its maximum power point (MPP). A Maximum Power Point Tracker (MPPT) method for locating the operation point of the solar generator at its MPP provides a control signal $u_{cont}$ The means for controlling the voltage between the input terminals operate on the basis of the control signal $u_{cont}$. The MPPT method is not discussed in detail in this document.

The AVMC method embodiment in Figure 6 comprises means for generating pulse width modulation on the basis of a control signal $u_{cont}$. These means comprise an internal feedback loop from a voltage over a capacitor of the switching converter, feedback loop producing a feedback signal $u_{c-s}$, and an averaging controller 1.1 providing an internal control signal $u_{ca}$. The controller acts as means for determining an average term on the basis of the control signal $u_{cont}$ and the feedback signal $u_{c-s}$ and means for adding the average term to the control signal $u_{cont}$, thus producing an internal control signal $u_{ca}$.

The embodiment also comprises means 1.2, 1.3, and 1.4 for controlling the switching devices on the basis of the internal control signal $u_{ca}$.

The time base 1.2 provides a pulse signal and a PWM ramp signal which is synchronized with the pulse signal. The pulse signal is fed to a Set-input (S) of an SR-flip-flop 1.3. The PWM ramp signal is compared with the internal control signal $u_{ca}$ with a comparator 1.4. The result of the comparison is fed to a Reset-input (R) of the SR-flip-flop 1.3.

As a result of the input signals, the (non-inverted) output of the SR-flip-flop 1.3 is at a high state when the value of the control signal $u_{ca}$ exceeds the PWM ramp value. When the PWM ramp value exceeds the value of the control signal $u_{ca}$, the (non-inverted) output of the SR-flip-flop 1.3 enters a low state. The output of the SR-flip-flop 1.3 is then fed to a gate driver 1.5 which converts the signal to a suitable level for controlling the switching device $S_1$.

A pulse width generation procedure is shown in Figure 7 where a slope $M_c$ of the PWM ramp signal equals $V_m/T_s$, the output of the internal voltage-loop controller $u_{ca}$ equals

$$u_{ca} = u_{cont} + G_{ca}(u_{cont} - u_{C-S}) \, , \qquad\qquad (11)$$

where $G_{ca}$ is the controller transfer function of the controller 1.1. The feedback signal $u_{c-s}$ can be the voltage of some capacitor of the converter, as in Figure 6, or the voltage of the sum of capacitors. In this embodiment, the feedback signal $u_{c-s} = k \cdot U_{c1}$, where k is a scaling factor, $k = R_4 / (R_3 + R_4)$ in this particular case.

The description of the method is given here in analog domain but it can be implemented equally in digital domain by applying the stated principles.

It will be obvious to a person skilled in the art that the inventive concept can be implemented in various ways. For instance, the converter according to the present invention may be used with a superconducting magnetic energy storage as the current source. The invention and its embodiments are not limited to the examples described above but may vary within the scope of the claims.

**Claims**

1. A switching converter (1), **characterized in that** the converter (1) comprises
   a first input terminal ($X_1$) and a second input terminal ($X_2$), both adapted to be connected to a current source (2),
   a first output terminal ($Y_1$) adapted to be connected to a load (3),
   a second output terminal ($Y_2$) connected to the second input terminal ($X_2$) and adapted to be connected to a load (3),
   a first inductor ($L_1$) with two terminals, connected from its first terminal to the first input terminal ($X_1$),
   a second inductor ($L_2$) with two terminals, connected from its second terminal to the first output terminal ($Y_1$),
   a switching device ($S_1$) connected between the first inductor ($L_1$) second terminal and the second inductor ($L_2$) first terminal, wherein the switching device ($S_1$) is adapted to be able to set the connection between the first inductor ($L_1$) and the second inductor ($L_2$) to a conducting and a non-conducting state,
   a first capacitor ($C_1$) connected between the input terminals ($X_1$, $X_2$), a first rectifier device ($D_1$) and a second rectifier device ($D_2$) connected in series between the input terminals ($X_1$, $X_2$), thus allowing a flow of current from the second input terminal ($X_2$) to the first input terminal ($X_1$),
   a second capacitor ($C_2$) connected between the second terminal of the first inductor ($L_1$) and a connection point between the first rectifier device ($D_1$) and the second rectifier device ($D_2$),
   a third rectifier device ($D_3$) connected between the second output terminal ($Y_2$) and the first terminal of the second inductor ($L_2$), thus allowing a flow of current from the second output terminal ($Y_2$) to the first terminal of the second inductor ($L_2$), and
   means for controlling a voltage between the input terminals on the basis of a control signal.

2. A switching converter (1) according to claim 1, **characterized in that** the current source (2) is a solar generator.

3. A switching converter (1) according to claim 1 or 2, **characterized in that** the load (3) is essentially a DC bus.

4. A switching converter (1) as claimed in any one of claims 1 to 3, **characterized in that** the switching controller comprises means for generating pulse width modulation on the basis of a control signal ($u_{co}$), where the means for generating pulse width modulation comprise
   an internal feedback loop from a voltage over a capacitor or a sum of capacitors of the switching converter, the feedback loop producing a feedback signal ($u_{c-s}$),
   means for determining an average term on the basis of the control signal ($u_{co}$) and the feedback signal ($u_{c-s}$),
   means for adding the average term to the control signal, thus producing an internal control signal ($u_{ca}$) and

means for controlling the switching devices on the basis of the internal control signal *(u$_{ca}$)*.

5. A switching converter (1) as claimed in any one of claims 1 to 4, **characterized in that** the means for controlling the voltage between the input terminals operate on the basis of a control signal provided by an MPPT method.

Figure 1

Figure 2

Figure 3

Figure 4

Figure 5

Figure 6

Figure 7

Europäisches
Patentamt

European
Patent Office

Office européen
des brevets

# EUROPEAN SEARCH REPORT

Application Number

EP 10 17 3165

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DRAGAN MAKSIMOVIC ET AL: "SWITCHING CONVERTERS WITH WIDE DC CONVERSION RANGE", IEEE TRANSACTIONS ON POWER ELECTRONICS, IEEE SERVICE CENTER, PISCATAWAY, NJ, US, vol. 6, no. 1, 1 January 1991 (1991-01-01), pages 151-157, XP000175329, ISSN: 0885-8993, DOI: DOI:10.1109/63.65013 * Section II.,figure 2 * | 1-3,5 | INV. H02M3/155 |
| Y | LEPPÄAHO J ET AL: "Solar-Generator-Interfacing with a Current-Fed Superbuck Converter Implemented by Duality-Transformation Methods", THE 2010 INTERNATIONAL POWER ELECTRONICS CONFERENCE (IPEC), SAPPORO, 21 June 2010 (2010-06-21), pages 680-687, XP002614878, * page 680, column 2 * | 1-3,5 | |

TECHNICAL FIELDS
SEARCHED (IPC)

H02M

The present search report has been drawn up for all claims

| Place of search | Date of completion of the search | Examiner |
|---|---|---|
| Munich | 2 February 2011 | Hanisch, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&.................................................................................................
& : member of the same patent family, corresponding
    document

EPO FORM 1503 03.82 (P04C01)